(19) **Europäisches Patentamt**
**European Patent Office**
**Office européen des brevets**

(11) Veröffentlichungsnummer: **0 327 898**
**A1**

## (12) EUROPÄISCHE PATENTANMELDUNG

(21) Anmeldenummer: **89101384.9**

(22) Anmeldetag: **27.01.89**

(51) Int. Cl.⁴: **C08G 18/50 , C08G 18/48**

(30) Priorität: **30.01.88 DE 3802772**
**18.11.88 DE 3838973**

(43) Veröffentlichungstag der Anmeldung:
**16.08.89 Patentblatt 89/33**

(84) Benannte Vertragsstaaten:
**AT BE CH DE ES FR GB IT LI NL SE**

(71) Anmelder: **PHOENIX AKTIENGESELLSCHAFT**
**Hannoversche Strasse 88**
**D-2100 Hamburg 90(DE)**

(72) Erfinder: **Schaper, Herbert, Dipl.-Chem. Dr.**
**Hagedornstrasse 22**
**D-2000 Hamburg 13(DE)**

(54) **Verfahren zur Herstellung von Polyurethan-Polyharnstoff-Formkörpern.**

(57) Die Erfindung betrifft ein Verfahren zur Herstellung von Polyurethan-Polyharnstoff-Formkörpern nach der Reaktionsspritzgußtechnik (RIM-Verfahren) durch Umsetzung von
    a) Polyisocyanaten mit
    b) Polyetherpolyaminen mit endständigen aliphatischen oder aromatischen Aminogruppen oder alternativ zu (b) mit
    c) Polyaminen mit endständigen aliphatischen oder aromatischen Aminogruppen in Gegenwart von di- und/oder trifunktionellen Polyetherpolyolen.
Das Wesentliche an dieser Erfindung besteht darin, daß die Polyetherpolyamin-Komponente bzw. die Polyamin-Polyetherpolyol-Komponente zusätzlich 0,5 bis 60 Gew.-% Polytetrahydrofuran enthält, u. z. bezogen auf das Polyetherpolyamin bzw. auf das Polyamin-Polyetherpolyol-Gemisch.

EP 0 327 898 A1

## Verfahren zur Herstellung von Polyurethan-Polyharnstoff-Formkörpern

Die Erfindung betrifft ein Verfahren zur Herstellung von Polyurethan-Polyharnstoff-Formkörpern gemäß Oberbegriff des Anspruchs 1. Derartige Formkörper sind aus der DE-A-34 13 938 und EP-A-0 092 672 bekannt.

Mit der Zugabe an Polytetrahydrofuran gemäß Kennzeichen des Anspruchs 1 wird das Problem der Kälteflexibilität der heute angebotenen Polyharnstofftypen gelöst, ohne die Vorzüge der hohen Wärmestandfestigkeit einzubüßen. Durch die beanspruchte Menge ist zwar ein geringer weichmachender Effekt und damit ein Abfall der Härte in Kauf zu nehmen. Das verbleibende Wärmestandverhalten reicht aber für den Bedarf bzw. für die Erfordernisse der Praxis aus. Die verbesserte Elastizität äußert sich nicht nur in der verbesserten Kältebeständigkeit, sondern auch in einer geringeren Bruchanfälligkeit bei Normaltemperatur und einem verbesserten Rückstellvermögen.

Das neue Werkstoffgemisch eignet sich auch hervorragend für eine Kombination mit Verstärkungsmaterialien, wie z. B. Glasfaser, Kohlefaser usw., welche zu einer weiteren Verbesserung des Wärmestandverhaltens beitragen.

Das Reaktionsgemisch kann neben den Komponenten (a), (b) bzw. (c), Polytetrahydrofuran und Füllstoffen noch Zusatzstoffe (z. B. Katalysatoren, Vernetzer, Treibmittel, Farb- bzw. Schwarzpasten) aufweisen. Hinsichtlich dieser Zusatzstoffe wird auf die DE-A-34 13 938 verwiesen.

### Experimentelle Beschreibung

Im Rahmen eines Beispiels werden nun Rezeptur und Verfahrensparameter angegeben. Dabei bestand die gesamte A-Komponente aus folgenden Bestandteilen:

| | |
|---|---|
| Bayflex 0749A[1] | 100 Gew.-Teile |
| Vernetzer BA 852[2] | 6 " |
| Polytetrahydrofuran (MG = 2000) | 18 " |
| Glasfaser MF 7901[3] | 37 " |
| | 161 Gew.-Teile |

1) Fertigsystem (Firma Bayer) auf der Basis von Polyamin mit endständigen aromatischen Aminogruppen in Gegenwart von trifunktionellen Polyetherpolyolen
2) Fertigsystem (Firma Bayer) auf der Basis von Polyamin mit endständigen aromatischen Aminogruppen (gelöst in trifunktionellen Polyetherpolyolen)
3) gemahlene Glasfasern (Firma Bayer; mittlere Faserlänge 180 $\mu$; mittlerer Durchmesser 14 $\mu$

Bei der Zubereitung der A-Komponente wurde die Glasfaser langsam in das Gemisch eingerührt.

Als B-Komponente wurde das Fertigsystem Desmodur PA 09 (Firma Bayer) mit Diphenylmethandiisocyanat als Hauptbestandteil eingesetzt. Diese B-Komponente wurde mit der A-Komponente mittels einer RIM-Hochdruckmaschine verschäumt, u. z. in folgendem Mischungsverhältnis in Gew.-Teilen:

A (gesamt): B = 100 : 44 (Isocyanatindex 110)

Die Verfahrensparameter waren:

| | |
|---|---|
| Rohstofftemperatur A, B [°C] | 48 ± 2 |
| Luftbeladung [Vol-%] | 53 ± 2 |
| Spezifisches Gewicht A [g/cm³] | 1,17 |
| Spezifisches Gewicht des geschäumten Artikels [g/cm³] | > 1,18 |
| Einschußzeit [sec] | 1,14 |
| Formtemperatur [°C] | 60 |
| Formstandzeit [sec] | 35 |
| Drücke im Hochdruckkreislauf A,B [bar] | 200 |

**Ansprüche**

1) Verfahren zur Herstellung von Polyurethan-Polyharnstoff-Formkörpern nach der Reaktionsspritzgußtechnik (RIM-Verfahren) durch Umsetzung von
a) Polyisocyanaten mit
b) Polyetherpolyaminen mit endständigen aliphatischen oder aromatischen Aminogruppen oder alternativ zu (b) mit
c) Polyaminen mit endständigen aliphatischen oder aromatischen Aminogruppen in Gegenwart von di- und/oder trifunktionellen Polyetherpolyolen,
dadurch gekennzeichnet, daß die Polyetherpolyamin-Komponente bzw. die Polyamin-Polyetherpolyol-Komponente zusätzlich 0,5 bis 60 Gew.-% Polytetrahydrofuran enthält, u. z. bezogen auf das Polyetherpolyamin bzw. auf das Polyamin-Polyetherpolyol-Gemisch.

2) Verfahren nach Anspruch 1, dadurch gekennzeichnet, daß 3 bis 20 Gew-% Polytetrahydrofuran eingesetzt werden.

3) Verfahren nach Anspruch 1 oder 2, dadurch gekennzeichnet, daß Polytetrahydrofuran mit einem Molekulargewicht (MG) von 500 bis 3000 ± 300 eingesetzt wird.

4) Verfahren nach Anspruch 3, dadurch gekennzeichnet, daß Polytetrahydrofuran mit einem Molekulargewicht (MG) von 2000 ± 300 eingesetzt wird.

5) Verfahren nach einem der Ansprüche 1 bis 4, dadurch gekennzeichnet, daß zusätzlich Füllstoffe bis zu 40 Gew.-%, bezogen auf das Endprodukt, eingesetzt werden.

6) Verfahren nach Anspruch 5, dadurch gekennzeichnet, daß als Füllstoff Verstärkungsfasern wie Glasfaser, Kohlefaser oder Fasern auf anderer anorganischer oder organischer Grundlage in Anteilen bis zu 25 Gew.-%, bezogen auf das Endprodukt, Verwendung finden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | RUBBER AGE Seiten 45-52, Dezember 1973, NORMAN E. RUSTAD et al.:"Polyurethane Elastomers" * gesamtes Dokument * | 1,3,4 | C 08 G 18/50 C 08 G 18/48 |
| Y | EP-A-0 081 701 (BAYER) * Beispiel 7 * | 1,3,4 | |
| D,A | DE-A-3 413 938 (BASF) * gesamtes Dokument * | 1,5,6 | |

**RECHERCHIERTE SACHGEBIETE (Int. Cl.4)**

C 08 G 18/00

Der vorliegende Recherchenbericht wurde für alle Patentansprüche erstellt

| Recherchenort | Abschlußdatum der Recherche | Prüfer |
|---|---|---|
| BERLIN | 19-04-1989 | HOEPFNER W.W.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)